Europäisches Patentamt

European Patent Office

Office européen des brevets

(11) Veröffentlichungsnummer: **0 267 473 B1**

# EUROPÄISCHE PATENTSCHRIFT

(45) Veröffentlichungstag der Patentschrift: **08.07.92**

(51) Int. Cl.5: **A22C 13/02**

(21) Anmeldenummer: **87115497.7**

(22) Anmeldetag: **22.10.87**

(54) **Verfahren und Vorrichtung zum Raffen von schlauchförmigen Hüllen, insbesondere Wursthüllen.**

(30) Priorität: **31.10.86 DE 3637185**

(43) Veröffentlichungstag der Anmeldung:
**18.05.88 Patentblatt 88/20**

(45) Bekanntmachung des Hinweises auf die
Patenterteilung:
**08.07.92 Patentblatt 92/28**

(84) Benannte Vertragsstaaten:
**AT BE CH DE FR GB IT LI NL SE**

(56) Entgegenhaltungen:
EP-A- 0 008 781      EP-A- 0 161 055
DE-A- 1 432 502      DE-A- 1 954 103
FR-A- 1 301 284      GB-A- 598 768

(73) Patentinhaber: **HOECHST AKTIENGESELL-
SCHAFT
Postfach 80 03 20
W-6230 Frankfurt am Main 80(DE)**

(72) Erfinder: **Regner, Richard
Holthausenstrasse 12
W-6500 Mainz-Bretzenheim(DE)**
Erfinder: **Romeike, Arno
Flachsbühlstrasse 21
W-6204 Taunusstein 2(DE)**
Erfinder: **Weinheimer, Alois
Weinheimer Landstrasse 109
W-6508 Alzey(DE)**

## Beschreibung

Die Erfindung bezieht sich auf ein Verfahren zum Raffen von schlauchförmigen Hüllen, insbesondere Wursthüllen von der im Oberbegriff des Anspruchs 1 genannten Art sowie auf eine für dieses Verfahren geeignete Einrichtung, welche die im Oberbegriff des Anspruchs 6 aufgeführten Elemente umfaßt.

Die Erfindung geht aus von dem beispielsweise aus der EP-A-0 131 753 (= US-Patentschrift 4,547,932) bekannt gewordenen Stand der Technik, wonach beim Raffen von Schlauchhüllen ein Raffdorn verwendet wird, der während des Raffens und auch während des Abtrennens der gerafften Schlauchhülle vom ungerafften Teil zumindest teilweise innerhalb der noch ungerafften Schlauchhülle verbleiben kann. Die in der Druckschrift beschriebene Einrichtung zum Raffen von Schlauchhüllen umfaßt einen Raffdorn, der aus zwei Dorneinheiten besteht.

Es sind auch andere Raffvorrichtungen bekannt, bei denen der Raffdorn oder ein Teil von ihm ständig innerhalb des noch ungerafften Hüllenteils verbleibt. Einen solchen ortsfesten Raffdorn zeigt beispielsweise die Raffvorrichtung der DE-C-12 95 414, und auch die Füllvorrichtung der EP-A-0 025 923 enthält ein Raffteil, bei dem sich der Raffdorn ständig innerhalb der noch ungerafften Hülle befindet.

Es ist ein häufiges Bestreben, die Schlauchhüllen möglichst dicht zu raffen, so daß der resultierende geraffte Hüllenstab, der auch als Raupe bezeichnet wird, eine möglichst große füllbare Schlauchlänge umfaßt. Ein Maß für die Verdichtung der Hülle in der Raupe ist das Raffverhältnis, welches das Verhältnis aus ungeraffter Hüllenlänge zu Raupenlänge angibt. Hierbei ist zu beachten, daß der Durchmesser der Innenbohrung der Raupe durch die vorgegebene Querschnittsgröße des Füllrohrs der Füllvorrichtung vorgegeben ist und deshalb zur Vergrößerung der Raffdichte keinen Beitrag leisten kann. Auch der Außendurchmesser des gerafften Hüllenstabes ist zur Vergrößerung der in der Raupe zusammengepreßten Schlauchlänge durch den Raffvorgang nur beschränkt variierbar und wird praktisch durch den Durchmesser des zu raffenden Schlauches festgelegt.

Ein weiteres Ziel der Rafftechnik ist die Herstellung von Raupen mit hoher Biegefestigkeit und gutem Zusammenhalt der Falten. Es ist bekannt, hierzu die gerafften Schlauchhüllen während oder nach dem Fälteln gegen einen Anschlag fest zusammenzupressen.

Es ist ferner bereits bekannt (DE-A-19 54 103), beim Raffen von Schläuchen, die aufgrund ihrer geringen Festigkeit nur mit geringem Druck aufgeblasen werden dürfen, Führungselemente auf dem Raffdorn vorzusehen, welche den Schlauch konzentrisch zum Raffdorn führen und in gleichmäßigen Abstand zum Raffdorn halten. Der äußere Umfang dieser Führungselemente ist zwar größer als der Innenumfang des darüber vorrückenden aufgeblasenen Schlauches, doch können sie keine Spreizwirkung auf den Schlauch ausüben, weil sie elastische und federnde Oberflächen besitzen und auf diese Weise sich dem Schlauchinnenumfang anpassen. Es wurde ferner beschrieben (EP-A-0 161 055), den Raffdorn im Raffbereich zu verjüngen. Eine Aufdehnung des Schlauches vor dem Raffwerkzeug ist allerdings auch nach diesem Stand der Technik nicht vorgesehen.

Es ist somit Aufgabe der Erfindung, einen technisch einfachen Weg zur Erhöhung der Raffdichte der zu Raupen gerafften Schlauchhüllen aufzufinden, d.h. die in einer Raupe zusammengepreßten Schlauchlängen zu vergrößern, und gleichzeitig ihre Bruchfestigkeit und Knickbeständigkeit zu verbessern.

Diese Aufgabe wird gelöst durch das Verfahren mit den Merkmalen des Anspruchs 1. Dieses Verfahren geht aus von den eingangs erläuterten Maßnahmen, wie sie beim Raffen von Schlauchhüllen, insbesondere Wursthüllen, üblich sind. Das Raffverfahren umfaßt das kontinuierliche Zuführen der Schlauchhülle von einer Vorratsrolle über einen Raffdorn, wobei die Schlauchhülle mit Luft aufgeblasen wird. Die aufgeblasene Hülle wird durch ein übliches Raffwerkzeug geführt, welches beispielsweise aus Raffrädern oder einem hülsenförmigen Raffelement bestehen kann. Das Raffwerkzeug wirkt auf die äußere Umfangsfläche der aufgeblasenen Hülle ein und legt sie in Falten. Der geraffte Hüllenteil wird gegen einen Anschlag zusammengepreßt und verdichtet.

Der wesentliche Verfahrensschritt der Erfindung besteht darin, die Schlauchhülle möglichst kurz vor der Einwirkung des Raffwerkzeugs in Umfangsrichtung aufzudehnen. Hierzu ist es erforderlich, daß sich das Hüllenmaterial elastisch und plastisch verformen läßt, wie es bei Wursthüllen in der Regel der Fall ist. Unter einem elastisch und plastisch verformbaren Hüllenmaterial sind Folienschläuche zu verstehen, welche sich zunächst aufgrund ihrer Elastizität in Umfangsrichtung spreizen lassen und darüber hinaus aufgrund ihrer plastischen Eigenschaften wenigstens einen Teil dieser elastischen Aufdehnung als permanente plastische Radialverformung beibehalten. Der bleibende Anteil der Umfangsvergrößerung bewirkt eine Vergrößerung des Außendurchmessers des gerafften Hüllenstabes und eine Verringerung der Wandstärke der Schlauchhülle. Bei der Auswahl des geeigneten Schlauchmaterials ist ferner darauf zu achten, daß die zum Aufdehnen erforderliche Kraft nicht allzu hoch ist, so daß beispielsweise Schläuche aus Polyethylenterephthalat weniger gut geeignet sind.

Geeignete Wursthüllen bestehen beispielsweise aus einem Trägerschlauch aus Cellulose, der vorzugsweise keine Faserverstärkung besitzt, aus thermoplastischem Kunststoff oder Mischungen von Kunststoffen. Bevorzugte Kunststoffe sind Polyamide, insbesondere gesättigte lineare aliphatische Polyamide mit der allgemeinen Formel $\{$ NH - CO - R$^1$ - CO - NH - R$^2$ $\}$, in der R$^1$ und R$^2$ gleich - (CH$_2$)$_n$ - (n = 2 - 7) sind, beispielsweise Polyhexamethylenadipinsäureamid (R$^1$ = (CH$_2$)$_4$, R$^2$ = (CH$_2$)$_6$), oder Polyamide der allgemeinen Formel $\{$ NH- R$^3$ -CO $\}$, beispielsweise Polycaprolactam (R$^3$ = (CH$_2$)$_5$), oder statistische Copolyamide, die aus Einheiten dieser Polymeren unter Verwendung von Adipinsäure, Azelainsäure, Sebacinsäure sowie Terephthalsäure und Diaminen, wie Hexamethylendiamin oder Trimethylhexamethylendiamin, hergestellt werden. Geeignete Materialien sind auch Polyolefine, insbesondere auf der Basis von Ethylen-Homopolymerisat oder Ethylen-Mischpolymerisaten mit anderen Olefinen mit 3 bis 6 C-Atomen. Die genannten Kunststoffe können auch in einer Mischung vorliegen. Polyester auf der Basis von Kondensationsprodukten der Terephthalsäure mit Ethylenglykol müssen zur Herabsetzung der zum Aufdehnen erforderlichen Kraft entsprechend modifiziert werden, z. B. durch Kondensation mit Polyethylenglykol, oder werden als Mischungen mit Polyamiden eingesetzt (EP-A-0 176 980).

Die Schlauchhülle wird vorzugsweise bis zu 15 %, insbesondere bis zu 10 %, bezogen auf ihren Außenumfang vor dem Aufblasen beim Raffen, der auch als Ausgangskaliber bezeichnet wird, in Umfangsrichtung durch einen Aufdehnkörper gespreizt, wobei das sogenannte Spreizkaliber erreicht wird. Nach dem Durchlaufen des Aufdehnkörpers verringert sich das Hüllenkaliber allmählich bis auf die bleibende Umfangsdehnung. Beim Erreichen des Raffwerkzeugs zeigt die Hülle ein gegenüber dem Spreizkaliber bereits verringertes Raffkaliber, welches allerdings aufgrund der elastischen und plastischen Radialverformung der Hülle im allgemeinen immer noch bis 12, insbesondere bis zu 8% größer ist als das Ausgangskaliber.

Das Verfahren ist zweckmäßigerweise so zu führen, daß zum Zeitpunkt der Einwirkung der Raffkraft die Umfangsverringerung nach dem Aufspreizen der Hülle noch nicht abgeschlossen ist. Erst wenn die Hülle in Falten gelegt ist, ist die Rückbildung des Schlauchumfangs aufgrund der Elastizität des Hüllenmaterials abgeschlossen. Auf diese Weise läßt sich eine Erhöhung der Raffdichte um etwa 5 bis 15% erreichen. Durch die bleibende Verdehnung tritt außerdem eine erhöhte Querorientierung des Hüllenmaterials ein, wodurch die physikalischen Eigenschaften in Richtung des Schlauchumfanges verbessert werden.

Ein weiterer Vorteil ist die erzielte Verbesserung der Bruchfestigkeit und der Knickbeständigkeit sowie des Zusammenhalts der Raupe. Hierzu ist es allerdings zweckmäßig, die Falten in der Weise zu legen, daß der von den Falten in bezug auf die Raupenlängsachse gebildete Winkel kleiner als 90° ist, d. h. die in Falten gelegten Schlauchflächen sollen nicht senkrecht zur Längsachse des gerafften Hüllenstabes stehen. Durch den auf den Aufspreizvorgang folgenden Schrumpf des Hüllenkalibers bis auf den permanenten Anteil der Radialverdehnung werden die einzelnen Faltenlagen radial in Richtung auf die Innenbohrung der Raupe aufeinander gepreßt, wodurch die Knickbeständigkeit der Raupe verbessert wird. Die Verbesserung dieser Eigenschaften erleichtert die Handhabung der Raupen, insbesondere beim Transport und beim Aufziehen auf das Füllrohr beim Füllen mit Wurstmasse.

Die Schlauchhülle kann auf ihrer Innen- und/oder Außenseite die bei Wursthüllen bekannten Imprägnierungen oder Beschichtungen aufweisen. Vorzugsweise ist auf der Schlauchinnenseite ein Gleitmittel, z.B. Mineralöl oder Siliconöl vorhanden, welches die beim Aufspreizen auftretende Reibung mit dem Aufdehnkörper verringert.

Die obengenannte Aufgabe wird ferner gelöst durch die in Anspruch 6 angegebene Raffeinrichtung. Die von Anspruch 6 abhängigen Ansprüche geben zweckmäßige Weiterbildungen der Raffeinrichtung an. Gegenstand der Erfindung sind ferner die in den Ansprüchen 11 und 12 genannten Vorrichtungsteile dieser Raffeinrichtung.

Die Raffeinrichtung zeigt den zum Raffen von Schlauchhüllen, insbesondere Wursthüllen, üblichen Aufbau. Sie umfaßt einen Raffdorn, über den die Hülle in aufgeblasenem Zustand in Richtung auf das Raffwerkzeug geführt wird. Der Raffdorn besteht gewöhnlich aus einem hohlen Rohr, durch welches das zum Aufblasen der Hülle erforderliche Stützgas und gegebenenfalls eine zur Innenbeschichtung der Hülle geeignete Flüssigkeit, z.B. Gleitmittel, in die Hülle eingebracht wird. Die zur Fortbewegung der Hülle erforderlichen Elemente sind gewöhnlich Walzenpaare. Hierbei wird die Hülle von einem ersten Walzenpaar vor dem Erreichen des Raffdorns abgequetscht, um die Hülle im aufgeblasenen Zustand zu halten. Weitere Walzenpaare drücken die aufgeblasene Hülle gegen den Raffdorn und halten gleichzeitig den Raffdorn in schwimmender Lage. Nach dem letzten Walzenpaar durchläuft die aufgeblasene Hülle das Raffwerkzeug, welches aus Raffrädern oder einem hülsenförmigen Teil besteht, welches auf seiner Innenwand einen schraubenförmig gewundenen Vorsprung aufweist (US-A-4,185,358). Diese Raffwerkzeuge sind auch geeignet, die Raffalten in einen Winkel von kleiner als 90° in Bezug auf die Raupenlängsachse zu legen.

Der zur elastischen und plastischen Verformung der Schlauchhülle erforderliche Aufdehnkörper befindet sich auf der Außenseite des Raffdorns vor dem Einlauf der Schlauchhülle in das Raffwerkzeug. Der Aufdehnkörper hat vorzugsweise einen runden Querschnitt und ist scheiben-, ring- oder zylinderförmig. Zweckmäßigerweise hat seine von dem Raffwerkzeug abgewandte Querschnittsfläche eine kegelförmige oder kegelstumpfförmige Gestalt, so daß dieses erste Ende des Aufdehnkörpers eine konisch verlaufende, den Schlauch allmählich bis auf das Spreizkaliber aufweitende äußere Oberfläche besitzt. Der Aufdehnkörper ist entweder einstückig mit dem Raffdorn ausgebildet oder zeigt eine dem Raffdornquerschnitt angepaßte zentrale Bohrung, über die er auf den Raffdorn aufgeschoben und mit diesem verbunden werden kann.

Der Raffdorn wird vorteilhafterweise so ausgebildet, daß er während des Raffvorgangs in seiner Lage verbleibt, um eine Verschiebung des Aufdehnkörpers in Richtung der Schlauchfortbewegung zu vermeiden. Solche Anordnungen werden beispielsweise in der DE-C-12 95 414 oder EP-A-0 025 923 beschrieben. Hierbei ist der Raffdorn schwimmend gelagert und verbleibt ständig, auch beim Abtrennen der Raupe, innerhalb der noch ungerafften Hülle. Bei Verwendung der Raffvorrichtung der DE-C-12 95 414 wird der Aufdehnkörper auf dem als Kräuseldorn bezeichneten Raffdorn vor dem als Kräuselgurte ausgebildeten Raffwerkzeug angebracht. Bei der Vorrichtung der EP-A-0 025 923 wird der Aufdehnkörper vor den Raffwalzen auf dem schwimmenden Raffrohr befestigt.

Eine besonders geeignete Raffeinrichtung mit schwimmendem Raffdorn ist der EP-A-0 131 753 zu entnehmen. Der Raffdorn besteht in diesem Fall aus zwei Dorneinheiten, welche während des Raffvorgangs fluchtend in Eingriff bringbar sind. Die Verbindungsstelle der beiden Dorneinheiten kann sich, wie in der EP-A-0 131 753 gezeigt, neben dem Raffelement befinden. Es ist aber auch möglich, diese Verbindungsstelle noch vor das Raffelement bis neben den Aufdehnkörper zu verlegen.

Die zweite Dorneinheit, deren Länge vorzugsweise allerdings direkt nach dem Raffwerkzeug angeordnet ist, trägt die geraffte Schlauchhülle. Beim Raffvorgang wird die Schlauchhülle von einer Rolle abgewickelt und im aufgeblasenen Zustand über den Raffdorn durch das Raffwerkzeug geführt, welches die Schlauchhülle auf den Raffdorn in Falten legt und gegen einen Anschlag zusammenpreßt. Sobald die gewünschte Raupenlänge erreicht ist, wird die Fortbewegung der Hülle in Raffrichtung unterbrochen und die beiden Dorneinheiten werden durch längsaxiale Verschiebung mindestens einer der Dorneinheiten voneinander getrennt. Das Abtrennen der Raupe, welche sich auf der zweiten Dorneinheit befindet, vom noch ungerafften Hüllenteil erfolgt zweckmäßigerweise durch ein Messer, welches die Schlauchhülle in dem nun zwischen den Dorneinheiten entstandenen Zwischenraum durchschneidet. Danach wird die zweite Dorneinheit mit der darauf vorhandenen Raupe entfernt und durch eine weitere gleich gebaute Dorneinheit ausgetauscht. Während des Raffvorgangs und auch beim Austausch der zweiten Dorneinheit verbleibt die erste Dorneinheit innerhalb des noch ungerafften Hüllenteils. Der Aufdehnkörper befindet sich in diesem Fall auf der ersten Dorneinheit unmittelbar vor dem Raffwerkzeug und nach den Förderrädern.

Infolge der schwimmenden Lagerung des Raffdorns innerhalb der noch ungerafften Hülle ist es nicht erforderlich, während des Raffens oder beim Unterbrechen des Raffvorgangs zum Abtrennen der gerafften Hülle vom noch ungerafften Schlauchteil den Raffdorn in Raffrichtung zu verschieben. Aus diesem Grund kann auch der Aufdehnkörper ständig in seiner Lage verbleiben. Somit besteht keine Gefahr, daß der Aufdehnkörper mit dem Raffwerkzeug oder den die Schlauchhülle transportierenden Walzen in Kontakt kommt. Eine nur geringfügige Verschiebung des Raffdorns ist jedoch auch mit dem Aufdehnkörper möglich, wenn zwischen ihm und dem Raffwerkzeug ein ausreichender Abstand vorhanden ist.

Es ist besonders vorteilhaft, das Verfahren so durchzuführen bzw. die Vorrichtungsteile so zu dimensionieren, daß der nicht permanente Anteil der Radialdehnung, der somit nicht auf die plastische Verformung beim Spreizvorgang zurückgeht, zumindest teilweise beim Erreichen des Raffwerkzeugs noch vorhanden ist. Dann ist gewährleistet, daß das beim Eingang in das Raffwerkzeug vorhandene Raffkaliber der Hülle noch relativ groß ist und die zeitabhängige allmähliche Zurückbildung des Hüllenkalibers bis auf den permanenten Anteil der Radialdehnung erst an dem fertig gerafften und gepreßten Hüllenstab voll zur Geltung kommt. Durch diese Art eines zeitlich verzögerten Schrumpfvorganges in der gerafften Schlauchhülle erfolgt eine zusätzliche Verdichtung der Raupe und eine Erhöhung ihrer Biegefestigkeit.

Um diese Wirkungen zu erreichen, ist eine nur kurze Verweilzeit zwischen Spreiz- und Raffvorgang erforderlich, wozu man den Abstand zwischen Aufdehnkörper und Raffwerkzeug möglichst gering hält und/oder die Geschwindigkeit der Schlauchfortbewegung erhöht.

Eine Erhöhung der Raffdichte ist aber bereits dadurch gewährleistet, daß die Schlauchhülle beim Aufdehnen vor dem Raffwerkzeug eine permanente Aufdehnung erhält. Dieser Spreizvorgang vergleichmäßigt hierbei den Schlauchdurchmesser, so daß die Schlauchhülle beim späteren Füllvorgang, bei dem das Wurstbrät in die sich entraffende Schlauchhülle eingepreßt wird, gleichförmig vom Füllrohr abläuft, und pralle Würste mit gleichmäßiger, einheitlicher Querschnittsform und konstantem Durchmesser erhalten werden.

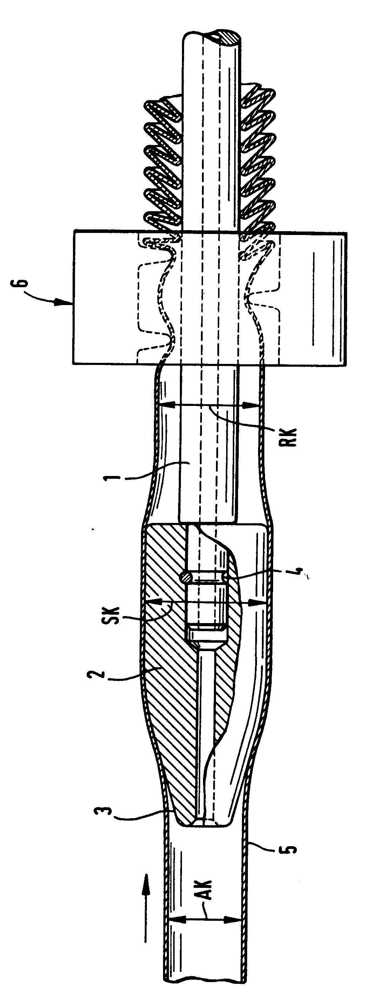

Eine Ausführungsform der Erfindung wird anhand der Figur näher erläutert. Sie zeigt einen hohlen Raffdorn 1, an dessen ersten Ende ein Aufdehnkörper 2 mit konisch verlaufendem ersten Ende 3 über eine Ringnut 4 befestigt ist. Eine von einer nicht gezeigten Vorratsrolle ablaufende Schlauchhülle 5 aus Cellulose ohne Faserverstärkung mit Ausgangskaliber AK von 18 mm wird beim Gleiten in Pfeilrichtung über den Aufdehnkörper 2 bis auf das Spreizkaliber SK aufgedehnt und zeigt danach beim Einlaufen in die nur schematisch gezeigte Raffzone 6 ein Raffkaliber RK, welches durch elastische und plastische Verformung größer ist als das Ausgangskaliber AK und gegenüber dem Spreizkaliber SK bereits wieder verringert ist. Die Cellulosehülle ohne Faserverstärkung wird auf einen kreisförmigen Querschnitt von 20mm aufgedehnt (Spreizkaliber), das Raffkaliber beträgt 19 mm. Die erhaltene geraffte Schlauchhülle zeigt eine Raffdichte, welche um etwa 8% größer ist als bei der gerafften Schlauchhülle ohne Vordehnung. Die Raffvorrichtung besteht ansonsten aus den üblichen Vorrichtungsteilen, die der Einfachheit halber nicht dargestellt sind. Hierzu gehören angetriebene Quetschwalzen, die sich vor dem Raffdorn befinden, und Förderräder, welche sich noch vor dem Aufdehnkörper 2 befinden und die aufgeblasene Schlauchhülle in Raffrichtung bewegen (vgl. EP-A-0 131 753). Die Schlauchhülle 5 befindet sich zwischen den Quetschwalzen und der Raffzone 6 in aufgeblasenem Zustand. Um die Schlauchhülle 5 zwischen dem Aufdehnkörper 2 und der Raffzone 6 aufgeblasen zu halten, befinden sich am Raffdorn 1 in diesem Bereich Öffnungen für den Luftaustritt aus dem inneren Hohlraum, oder es werden im Aufdehnkörper 2 eine oder mehrere achsparallele Längsbohrungen zum Druckausgleich der Stützluft vor und nach dem Aufdehnkörper vorgesehen.

**Patentansprüche**

1. Verfahren zum Raffen von schlauchförmigen Hüllen aus elastisch und plastisch verformbarem Material, insbesondere Wursthüllen, bei dem die in Richtung ihrer Längsachse geförderte, mit Stützgas aufgeblasene Hülle ein Raffwerkzeug (6) durchläuft, von diesem in Falten gelegt und gegen eine Gegenkraft zu einer Raupe dicht zusammengepreßt wird, dadurch gekennzeichnet, daß die Hülle zur Erhöhung der Raffdichte und der Bruchfestigkeit der Raupe vor dem Raffelement in Umfangsrichtung gespreizt wird, wodurch eine Radialverdehnung bewirkt wird.

2. Verfahren nach Anspruch 1, dadurch gekennzeichnet, daß die Hülle um 5 bis 15 % gespreizt wird.

3. Verfahren nach Anspruch 2, dadurch gekennzeichnet, daß die Hülle aus verstärkungsfreier Cellulose besteht.

4. Verfahren nach einem der Ansprüche 1 bis 3, dadurch gekennzeichnet, daß die Einwirkung des Raffelements unmittelbar nach dem Spreizen erfolgt, bevor die elastische Rückbildung abgeschlossen ist.

5. Verfahren nach einem der Ansprüche 1 bis 4, dadurch gekennzeichnet, daß beim Spreizen der Hülle eine permanente Umfangsvergrößerung der Hülle vorgenommen wird.

6. Einrichtung zum Raffen von schlauchförmigen Hüllen, geeignet zur Durchführung des Verfahrens nach Anspruch 1, umfassend einen Raffdorn (1) im Innern einer zu raffenden schlauchförmigen Hülle (5) und ein in Raffrichtung folgendes Raffwerkzeug, durch das sich der Raffdorn (1) hindurch erstreckt, dadurch gekennzeichnet, daß am äußeren Umfang des Raffdorns vor dem Raffwerkzeug ein die Hülle spreizender Aufdehnkörper (2) mit rundem Querschnitt vorhanden ist.

7. Einrichtung nach Anspruch 6, dadurch gekennzeichnet, daß der Raffdorn (1) und der Aufdehnkörper (2) einstückig ausgebildet sind.

8. Einrichtung nach Anspruch 6 oder 7, dadurch gekennzeichnet, daß der Aufdehnkörper (2) eine kreiszylinderförmige Gestalt hat und an seinem in Raffrichtung gesehen ersten Ende eine konisch verlaufende äußere Oberfläche (3) aufweist.

9. Einrichtung nach einem der Ansprüche 6 bis 8, dadurch gekennzeichnet, daß der Raffdorn (1) durch Halteelemente vor dem Raffwerkzeug schwimmend in seiner Lage gehalten wird.

10. Einrichtung nach Anspruch 9, dadurch gekennzeichnet, daß der Raffdorn (1) aus zwei Dorneinheiten besteht, wobei sich der Aufdehnkörper (2) auf der ersten Dorneinheit befindet.

11. Für die Einrichtung nach einem der Ansprüche 6 bis 10 geeigneter Raffdorn (1) mit einem Aufdehnkörper (2) mit rundem Querschnitt auf seiner äußeren Oberfläche.

**12.** Für die Einrichtung nach einem der Ansprüche 6 bis 10 geeigneter Aufdehnkörper (2) mit runder äußerer Oberfläche und einer Innenbohrung mit Halteelementen (4) zum Aufbringen und Befestigen an einem Raffdorn.

## Claims

**1.** A process for shirring tubular casings of an elastically and plastically deformable material, in particular sausage casings, in which the casing, conveyed in the direction of its longitudinal axis and inflated with a supporting gas, runs through a shirring tool (6), is laid down in folds by the latter and is tightly compressed against a counterforce to form a concertina, wherein the casing is expanded in the circumferential direction before the shirring element, in order to enhance the shirring density and the breaking strength of the concertina, a radial stretching being effected in this way.

**2.** The process as claimed in claim 1, wherein the casing is expanded by 5 to 15%.

**3.** The process as claimed in claim 2, wherein the casing is composed of non-reinforced cellulose.

**4.** The process as claimed in any of claims 1 to 3, wherein the shirring element acts immediately after expanding, before the elastic restoration is complete.

**5.** The process as claimed in any of claims 1 to 4, wherein the circumference of the casing is permanently increased while being expanded.

**6.** A device for shirring tubular casings, suitable for carrying out the process as claimed in claim 1, comprising a shirring mandrel (1) in the interior of a tubular casing (5) to be shirred and a shirring tool which follows in the direction of shirring, the shirring mandrel (1) expanding through the shirring tool, wherein a stretching body (2) having a circular cross-section and expanding the casing is provided on the outer periphery of the shirring mandrel before the shirring tool.

**7.** The device as claimed in claim 6, wherein the shirring mandrel (1) and the stretching body (2) are formed integrally.

**8.** The device as claimed in claim 6 or 7, wherein the stretching body (2) has a circular-cylindrical shape and a tapering outer surface (3) at its end which is first in the direction of shirring.

**9.** The device as claimed in any of claims 6 to 8, wherein the shirring mandrel (1) is held in a floating position in front of the shirring tool by means of holding elements.

**10.** The device as claimed in claim 9, wherein the shirring mandrel (1) is composed of two mandrel units, the stretching body (2) being located on the first mandrel unit.

**11.** A shirring mandrel (1), suitable for the device as claimed in any of claims 6 to 10, with a stretching body (2) having a circular cross-section being provided on its outer surface.

**12.** A stretching body (2), suitable for the device as claimed in any of claims 6 to 10, with a circular outer surface and an internal bore with holding elements (4) for fitting and fixing it to a shirring mandrel.

## Revendications

**1.** Procédé de plissage d'enveloppes tubulaires en matériau déformable élastiquement et plastiquement, en particulier de boyaux de saucisse, dans lequel l'enveloppe, dilatée avec un gaz vecteur et acheminée selon son axe longitudinal, passe à travers un outil de plissage (6), est plissée par lui et est fermement comprimée contre une force antagoniste pour former un soufflet, caractérisé en ce que l'enveloppe est dilatée dans la direction de sa circonférence, avant l'élément de plissage, afin d'augmenter la densité de plissage et la résistance à la rupture du soufflet, ce qui provoque une dilatation radiale.

**2.** Procédé selon la revendication 1, caractérisé en ce que l'enveloppe est dilatée de 5 à 15 %.

**3.** Procédé selon la revendication 2, caractérisé en ce que l'enveloppe se compose de cellulose sans renforcement.

**4.** Procédé selon une quelconque des revendications 1 à 3, caractérisé en ce que l'élément de plissage agit immédiatement après la dilatation, avant que la restauration élastique ne soit complète.

**5.** Procédé selon une quelconque des revendications 1 à 4, caractérisé en ce que la circonférence de l'enveloppe est agrandie de façon permanente par la dilatation de cette enveloppe.

6. Dispositif de plissage d'enveloppes tubulaires, approprié pour réaliser le procédé de la revendication 1, comprenant une mandrin de plissage (1) à l'intérieur d'une enveloppe tubulaire (5) à plisser et, à la suite dans la direction du plissage, un outil de plissage à travers lequel passe le mandrin de plissage (1), caractérisé en ce qu'un élément dilatant (2) de section ronde est présent, pour dilater l'enveloppe, à la circonférence externe du mandrin de plissage et avant l'outil de plissage.

7. Dispositif selon la revendication 6, caractérisé en ce que le mandrin de plissage (1) et l'élément dilatant (2) font partie intégrante l'un de l'autre.

8. Dispositif selon la revendication 6 ou 7, caractérisé en ce que l'élément dilatant (2) présente une forme cylindrique circulaire et possède, à sa première extrémité vue dans la direction du plissage, une surface (3) externe se terminant en cône.

9. Dispositif selon une quelconque des revendications 6 à 8, caractérisé en ce que le mandrin de plissage (1) est maintenu en position flottante avant l'outil de plissage par des éléments de maintien.

10. Dispositif selon la revendication 9, caractérisé en ce que le mandrin de plissage (1) se compose de deux unités de plissage, l'élément dilatant (2) se trouvant sur la première unité.

11. Mandrin de plissage (1), approprié pour le dispositif selon une quelconque des revendications 6 à 10, muni, sur sa surface externe, d'un élément dilatant (2) de section ronde.

12. Elément dilatant (2), approprié pour le dispositif selon une quelconque des revendications 6 à 10, pourvu d'une surface externe circulaire et d'un alésage interne avec éléments de maintien (4) pour montage et fixation sur un mandrin de plissage.